# DEMANDE DE BREVET EUROPEEN

(11) **EP 4 201 203 A1**
(43) Date de publication de la demande: **28.06.2023**
(21) Numéro de dépôt: 22306959.2
(22) Date de dépôt: 20.12.2022
(51) Int. Cl.: A01N 43/16, A01N 53/00, A01P 3/00, A01P 7/04

(54) **UTILISATION D'OLIGOMÈRES PROCYANIDOLIQUES EN TANT QU'ACTIVATEUR DE PRODUITS PESTICIDES**

(30) Priorité: 22.12.2021 FR 2114261
(71) Demandeur: Berkem Developpement, 33290 Blanquefort (FR)
(72) Inventeur: MESSAOUDI, Daouia, 69800 SAINT-PRIESST (FR); FAHY, Olivier, 33000 BORDEAUX (FR)
(74) Mandataire: Plasseraud IP

(57) **Abrégé**

La présente invention relève du domaine des pesticides et plus particulièrement des activateurs de produits pesticides, tels que des produits insecticides ou fongicides. Elle concerne également un procédé de traitement curatif et/ou préventif de préservation du bois ou de lutte anti-nuisibles du bois, un procédé de lutte contre les nuisibles, ainsi qu'un kit insecticide ou fongicide ou pour la protection du bois ou pour la lutte anti-nuisibles du bois.

## Description

### Domaine technique

La présente invention relève du domaine des pesticides et plus particulièrement des activateurs de produits pesticides, tels que des produits insecticides ou fongicides. Elle concerne également un procédé de traitement curatif et/ou préventif de protection du bois ou de lutte anti-nuisibles du bois au moyen d'un produit de protection du bois ou de lutte anti-nuisibles du bois comprenant un activateur de produit pesticide, un procédé de lutte contre les nuisibles au moyen d'une composition insecticide ou répulsive comprenant un tel activateur, ainsi qu'un kit insecticide ou fongicide ou pour la protection du bois ou pour la lutte anti-nuisibles du bois.

### Technique antérieure

La lutte contre les organismes nuisibles repose actuellement essentiellement sur l'utilisation de produits chimiques non spécifiques, avec des risques maintenant bien connus pour les utilisateurs et l'environnement.

En effet, les produits de lutte contre les organismes nuisibles incorporent généralement un agent bioactif ayant une action préventive et/ou curative visant à prévenir et/ou empêcher le développement et la prolifération des organismes nuisibles. Ces agents bioactifs qui sont des agents pesticides doivent être utilisés à une concentration qui soit la plus faible possible afin de diminuer les effets néfastes sur les organismes vivants non ciblés.

Des adjuvants sont parfois ajoutés afin d'améliorer le mode d'action de l'agent pesticide, qui peut alors être utilisé de manière efficace à de plus faibles concentrations. Toutefois, ces additifs sont majoritairement des additifs de synthèse, également toxiques ou néfastes pour l'homme et l'environnement.

Dans ce cadre, il est recherché l'utilisation de compositions contenant une ou plusieurs substance(s) pesticide(s) avec les critères d'innocuités établis par le règlement européen (UE) n°528/2012, faisant suite à la directive européenne 98/8/CE et/ou une substance pesticide compatible avec les critères d'innocuités établis par le règlement européen (UE) n°1107/2009, faisant suite à la directive européenne 91/414/CEE. Pour ce faire, la teneur en substance pesticide doit être abaissée au maximum dans la composition, et les adjuvants utilisés en combinaison avec la substance pesticide ne doivent pas être des produits chimiques de synthèses toxiques. La composition doit en particulier viser l'éradication des insectes sans pour autant être néfaste pour l'homme, pour les organismes non ciblés ou l'environnement.

Conséquemment, pour être efficace, et ce durablement, la lutte pesticide doit s'appuyer sur l'utilisation d'additifs écologiques, sûrs et utiles pour la prévention et le traitement pesticide.

Ainsi, il est nécessaire de mettre au point des activateurs de compositions pesticides qui soit naturels et qui permettent de diminuer la dose de composition pesticide tout en maintenant son efficacité.

### Résumé

Les inventeurs ont avantageusement démontré que des extraits de plantes riches en oligomères procyanidoliques permettaient de diminuer jusqu'à 75% la dose d'un produit pesticide tout en maintenant son efficacité.

Ainsi, et selon un **premier aspect,** la présente invention concerne l'utilisation d'oligomères procyanidoliques en tant qu'activateur de produit pesticide.

Selon un **deuxième aspect,** la présente invention concerne également des produits de protection du bois et de lutte anti-nuisibles du bois, ainsi que des compositions insecticides, des compositions répulsives et des compositions fongicides.

Les extraits selon l'invention ont en effet démontré leur effet activateur de produits insecticides à l'encontre d'insectes xylophages ainsi que des insectes volants et rampants.

Ainsi, et selon un **troisième aspect,** la présente invention concerne un procédé de traitement curatif et/ou préventif de protection du bois ou de lutte anti-nuisibles du bois au moyen d'un produit de protection du bois ou de luttes anti-nuisibles du bois, ledit produit comprenant au moins un extrait de plante ayant une teneur en oligomères procyanidoliques supérieure ou égale à 30% en poids, et au moins un produit insecticide et/ou fongicide, ledit procédé comprenant l'étape consistant à appliquer ledit produit sur le bois à traiter et/ou une surface.

Selon un **quatrième aspect,** la présente invention concerne également un procédé de lutte contre les nuisibles au moyen d'une composition insecticide et/ou une composition répulsive et/ou une composition fongicide, ladite ou lesdites composition(s) comprenant au moins un extrait de plante ayant une teneur en oligomères procyanidoliques supérieure ou égale à 30% en poids, et au moins un produit insecticide et/ou fongicide, ledit procédé comprenant l'étape consistant à appliquer ladite ou lesdites composition(s) sur la surface à traiter.

Enfin, et selon un **cinquième aspect,** la présente invention concerne un kit insecticide ou fongicide ou pour la protection du bois ou pour la lutte anti-nuisibles du bois, comprenant d'une part un extrait de plante ayant une teneur en oligomères procyanidoliques supérieure ou égale à 30% en poids, par rapport au poids total de l'extrait de plante et d'autre part, un insecticide et/ou un fongicide.

### Description détaillée

Selon un **premier aspect,** la présente invention concerne l'utilisation d'oligomères procyanidoliques en tant qu'activateur de produit pesticide.

### Produit pesticide

On entend par « produit pesticide », toute substance ou tout mélange, constitué d'une ou plusieurs substances actives, qui est destiné à détruire, repousser ou rendre inoffensifs les organismes nuisibles, à en prévenir l'action ou à les combattre de toute autre manière par une action autre qu'une simple action physique ou mécanique.

Par « organisme nuisible », on entend tout organisme, dont la présence n'est pas souhaitée ou qui produit un effet nocif pour l'homme, ses activités ou les produits qu'il utilise ou produit, pour les animaux ou l'environnement.

A titre illustratif, on citera parmi les organismes nuisibles, les insectes nuisibles, les insectes xylophages, les champignons, les champignons xylophages.

Ainsi, selon un mode de réalisation le produit pesticide est pesticide à l'encontre des insectes nuisibles, des insectes xylophages, des champignons, des champignons xylophages.

On citera parmi les insectes nuisibles les cafards ou blattes telles que la blatte germanique ou Blatella germanica, la blatte orientale ou Blatta orientalis, la blatte américaine ou Periplaneta americana, la blatte à bandes brunes ou Supella longipalpa, les fourmis telles que la fourmi noire de jardin ou Lasius niger, la fourmi charpentière, la fourmi rousse ou la fourmi rouge, la fourmi pharaon (Monomorium pharaonis), la fourmi d'Argentine, les puces ou ctenocephalides, les punaises de lit telles que Cimex lectularius, Cimex lectularius (résistant), les punaises des bois ou Palomena prasina, le cloporte (Porcellio scaber), le poisson d'argent ou lépisme (Lepisma saccharina) le tribolium de la farine (Tribolium confusum), le petit ténébrion (Alphitobius spp), le ténébrion jaune (Tenebrio molitor), leoléoptère des tapis (Anthrenus flavipes), les araignées telles que l'araignée de jardin (Araneus diadematus) ou l'araignée à longue patte (Pholcus spp.), les poux tel que le poux rouge de la volaille, les guêpes telles que le gilet jaune occidental (Vespula pensylvanica), les frelons, les mouches telles que Musca domestica, Lucilia sericata, Stomoxys calcitrans, Drosophila melanogaster, les abeilles, les mites alimentaires telles que la pyrale indienne de la farine (Plodia interpunctella), la pyrale méditerranéenne de la farine (Ephestia kuehniella), les mites de vêtement telles que Tineola bisselliella, les moustiques tels que ceux des genres Culex tel que Culex quinquefasciatus, du genre Anopheles tels que Anopheles gambiae, du genre Aedes tels que Aedes aegypti et Aedes albopictus, le charançon du riz (Sitophilus oryzae), l'aiguillonnier (Rhizoperta dominica), le calandre des grains (Sitophilus granarius), Sitophilus zeamais, l'alucite des grains (Sitotroga cerealella), Acarus siro, le ciron des champignons (Tyrophagus putrescentieae), le silvain, ou cucujide dentelé des grains (Oryzaephilus surinamensis), le petit ver de la farine (Tribolium castaneum, Tribolium confusum), Cryptolestes ferrugineus, Tenebroides mauritanicus, la Teigne des fruits secs ou Pyrale indienne des fruits secs (Plodia interpunctella), la pyrale de la farine (Ephestia kuehniella).

Selon un mode de réalisation, les insectes nuisibles sont choisis parmi les blattes telles que la blatte germanique ou Blatella germanica, la blatte orientale ou Blatta orientalis, la blatte américaine ou Periplaneta americana, la blatte à bandes brunes ou Supella longipalpa, les mouches telles que Musca domestica, Lucilia sericata, Stomoxys calcitrans, Drosophila melanogaster, les moustiques tels que ceux des genres Culex tel que Culex quinquefasciatus, du genre Anopheles tels que Anopheles gambiae, du genre Aedes tels que Aedes aegypti et Aedes albopictus,

Les insectes xylophages se nourrissent de bois et peuvent s'attaquer à n'importe quel type de bois, meubles, planchers, poutres, charpentes. Leur présence peut mettre en péril les éléments structurels d'une habitation. Leur action réduit la résistance du bois qui devient friable et n'est plus apte à remplir son rôle. Ces parasites ont réussi à développer une adaptabilité à leur environnement et sont capables de survivre dans du bois sec. Parmi les insectes xylophages, on citera les genres de termites tels les Reticultitermes spp (tels que le termite lucifuge (Reticulitermes lucifugus), le termite de Saintonge (Reticulitermes santonensis ou Reticulitermes flavipes) et le termite à cou jaune (Kalotermes flavicollis), Coptotermes spp, Prorhinotermes spp, Cryptotermes spp, Heterotermes spp, Nasusitermes spp, Macrotermes spp ; Odontermes spp ; Schedorhinotermes spp ; Microtermes spp , Microcerotermes spp, Allodontermes spp, les capricornes tels que *Hylotrupes bajulus,* les hyménoptères tels que le syrex, la guêpe des bois et l'abeille charpentière, les fourmis charpentières, les vrillettes telles que la petite vrillette, la grosse vrillette, la vrillette du pain et la vrillette des bibliothèques, les lyctus tels que le *lyctus brunneus* et le *lyctus linearus,* les insectes de bois frais, les hespérophanes.

Selon un mode de réalisation, les insectes xylophages sont choisis parmi les termites tels les Reticultitermes spp tels que le termite lucifuge (Reticulitermes lucifugus), le termite de Saintonge (Reticulitermes santonensis ou Reticulitermes flavipes) et le termite à cou jaune (Kalotermes flavicollis).

Lors de leur fructification, les champignons émettent dans l'atmosphère des quantités considérables de spores. Lorsqu'une spore entre au contact d'un substrat exploitable (par exemple le bois), elle émet un filament qui pénètre une cellule ligneuse, puis finit par coloniser toute la pièce en se multipliant. Certains filaments peuvent traverser le plâtre et les pierres tendres, et endommager la structure du bâti. On distingue 3 catégories de champignons selon la nature des dégâts provoqués :
- les champignons de la pourriture blanche ou fibreuse, capables de digérer tous les composés carbonés du bois (cellulose, hémicellulose et lignine) ; le bois ainsi dégradé présente une texture molle et apparaît de couleur blanche. On citera le coloriole multicolore (*Coriolus Versicolor ou Trametes versicolor*)*,* le polypore des caves (*Donkiporia*) ;
- Les champignons de la pourriture brune, incapables de digérer la lignine. Les bois ainsi dégradés présentent généralement une segmentation cubique plus ou moins importante et sont de couleur brune. On citera le mérule et ses rhizomorphes (*Serpula Lacrymans*)*,* le coniophore des caves (*Coniophora Puteana*)*, Poria Vaporaria, Poria Spez,* la lenzite du chêne, *Gloeophyllum Trabeum* et *Rhodonia placenta.*
- Les microchampignons de la pourriture molle, qui eux aussi ne dégradent que la cellulose et l'hémicellulose ; ils se rencontrent dans les zones en contact direct avec le sol ou la végétation et sont de moindre intérêt pour nos maisons.

Ainsi, parmi les champignons xylophages, on citera le coloriole multicolore (*Coriolus Versicolor*)*,* le polypore des caves (*Donkiporia*)*,* le mérule et ses rhizomorphes (*Serpula Lacrymans),* le coniophore des caves (*Coniophora Puteana), Poria Vaporaria, Poria Spez,* la lenzite du chêne, *Gloeophyllum Trabeum* et *Rhodonia placenta.*

Parmi les champignons, on citera, *Fusarium culmorum, Fusarium graminum, Gibberella avenacea, Monographella nivalis, Fusarium culmorum, Fusarium graminum, Verticillium sp., Pythium irregulare, Thanatephorus cucumeris, Fusarium solani, Thanatephorus cucumeris, Trichoderma viride, Sclerotinia sclerotiorum, Alternaria solani, Penicillium funiculosum, Aspergillus niger, Ceratocystis pilifera, Pyrenophora teres, Cercospora beticola, Pyrenophora tritici-repentis, Botryotinia fuckeliana, Botryotinia fuckeliana, Phytophthora infestans, Verticillium sp.*

Ainsi, le produit pesticide sera choisi parmi les insecticides et les fongicides.

Parmi les insecticides, on citera la thiaclopride, la cyperméthrine, la perméthrine, le diflubenzuron, la bifenthrine, la deltaméthrine, le fipronil, l'imiprothrine, la D-alléthrine, le Piperonyl Butoxide, le Geraniol, la d-tetramethine, un extrait de poivre, l'esbiothrine, la pralléthrine, le chlorfénapyr, la cyanamide, le chηsantheum et leurs mélanges, les microorganismes.

Selon un mode de réalisation, l'insecticide est choisi parmi la cyperméthrine, la perméthrine, le diflubenzuron, la bifenthrine, la deltaméthrine, le fipronil, l'imiprothrine, le Piperonyl Butoxide, le Geraniol, la d-tetramethine, l'extrait de poivre, la pralléthrine, le chlorfénapyr, le cyanamide, le chηsantheum et leurs mélanges.

Parmi les fongicides, on citera les fongicides de la famille des triazoles tels que le propiconazole, le tébuconazole, le cyproconazole, le 3-iodo-2-propynylbutylcarbamate (IPBC), le penfluflen, le fenpropimorphe, les ammoniums quaternaires et les sels d'ammonium quaternaires, tels que le chlorure d'alkyldiméthylbenzylammonium (ADBAC, BKC), le cation tétraméthylammonium (TMAC), le N-(3-aminopropyl)-N-dodecylpropane-1,3-diamine (diamine), le propionate de N,N-Didecyl-N-methyl-poly(oxyethyl) ammonium (Bardap26), le chlorure de didécyldiméthylammonium (DDAC) et leur mélange, les microorganismes.

### Oligomères procyanidoliques (OPC)

Les oligomères procyanidoliques (OPC en sigle) constituent une famille de composés flavonoïdes présents dans bon nombre de végétaux. Dans la littérature, diverses terminologies sont rencontrées pour désigner les mêmes substances que le terme oligomères procyanidoliques. Il s'agit notamment de procyanidols, proanthocyanidols, tanins catéchiques, tanins condensés, oligomères flavanoliques totaux (OFT en sigle), flavan-3-ols, flavonoïdes. Ces termes pourront être indifféremment utilisés.

Les inventeurs ont avantageusement démontré que les oligomères procyanidoliques ont un effet activateur des produits pesticides et permettaient ainsi de diminuer la dose de produit pesticide utilisé dans une composition, tout en maintenant l'efficacité du produit pesticide.

Ces composés peuvent être obtenus par tout procédé de synthèse organique, ou par isolement à partir d'une source végétale et en particulier d'une plante, comme par exemple une plante de la famille des *Vitaceae,* des *Pinaceae,* des *Fabaceae.*

Ainsi, la présente invention concerne également l'utilisation d'extrait de plante ou extrait végétal, riche en oligomères procyanidoliques en tant qu'activateur de produit pesticide.

Préférentiellement, la teneur en oligomères procyanidoliques de l'extrait de plante est supérieure ou égale à 30% en poids, par rapport au poids total de l'extrait végétal.

Appartiennent à ces familles, les espèces de plantes suivantes : *Vitis vinifera L, Pinus pinaster,* et *Arachis hypogaea.*

Ainsi, et selon une mode de réalisation, les oligomères procyanidoliques (OPC) est sous forme d'extrait de plante.

Typiquement, l'extrait sera choisi parmi les espèces *Vitis vinifera L, Pinus pinaster, Arachis hypogaea.*

### Extrait de raisin (Vitis vinifera L)

L'extrait de raisin selon la présente invention appartient au genre Vitis et est préférentiellement un extrait de l'espèce *Vitis vinifera L.*

Typiquement, l'extrait de raisin pourra être obtenu à partir des bourgeons, des fleurs, des fruits, des feuilles, des graines, de la peau, des racines, des pépins.

Préférentiellement, l'extrait de raisin est obtenu à partir des pépins.

Préférentiellement, l'extrait de raisin est obtenu à partir des pépins de l'espèce *Vitis vinifera L.*

D'après la littérature (BOMBARDELLI & al, Fitoterapia 66, 291-317, 1995), de nombreux composés phénoliques ont été identifiés dans diverses parties de la vigne et la partie la plus riche est constituée par les pépins. Les composés phénoliques des pépins de raisin peuvent être classés en deux catégories : les acides phénoliques (acide gallique) et les oligomères procyanidoliques (OPC en sigle).

Les oligomères procyanidoliques des pépins de raisin sont constitués d'oligomères et polymères de catéchine et épicatéchine.

Préférentiellement, la teneur en oligomères procyanidoliques est supérieure ou égale à 30% en poids, par rapport au poids total de l'extrait végétal.

Dans un mode de réalisation la teneur en oligomères procyanidoliques est supérieure ou égale à 90% % en poids, par rapport au poids total de l'extrait végétal, préférentiellement supérieure ou égale à 92% % en poids, par rapport au poids total de l'extrait végétal, préférentiellement supérieure ou égale à 95% et de manière encore plus préférée, la teneur en oligo-proanthocyanidines (OPC) est supérieure ou égale supérieure à 99%% en poids, par rapport au poids total de l'extrait végétal.

Dans la famille des OPC on distingue les deux séries suivantes :
- les proanthocyanidols de la série B (1 liaison interflavanique C4-C8 et C4-C6 et 2 liaisons éthers par dimère)
- Les proanthocyanidols de la série A (1 liaison interflavanique et 3 liaisons éthers par dimère).

D'après les nombreux travaux scientifiques, la composition chimique des OPC des pépins de raisin est très complexe. On distingue les flavanols monomères (catéchine, épicatéchine, épicatéchine- 3-O-gallate), et diverses combinaisons entre ces molécules monomériques allant du dimère (2 unités monomères) au décamère (10 unités monomères). Le mode de liaison interflavanique implique le carbone C4-C8 ou C4-C6 et caractéristique des oligomères de la série B.

Selon un mode de réalisation, la somme des flavanols monomères se situe entre 18 et 32% de l'extrait, et celle des flavanols dimères est entre 30 et 40%.

Selon un autre mode de réalisation, somme des flavanols monomères se situe entre 5 et 7% de l'extrait, et celle des flavanols dimères est entre 5 et 7%.

Préférentiellement, la teneur en monomère de catéchines est inférieure à 5% et la teneur en proanthocyanidines dimère B1 est inférieure à 8%.

Selon un mode de réalisation, l'extrait de raisin est fabriqué à partir des pépins de raisin de l'espèce *Vitis vinifera L* séchés, débarrassés de la pulpe et non fermentés et est obtenu par une succession d'étapes d'extraction, de purification et de séchage. L'extrait pourra être obtenu par toute technique connue de l'homme du métier.

Les principaux constituants de l'extrait de raisin selon l'invention sont quantifiés par chromatographie liquide haute performance en phase inverse avec détection par absorption ultraviolette.

Ainsi, et selon un mode de réalisation, la présente invention concerne l'utilisation d'un extrait de pépins de raisin en tant qu'activateur de produit insecticide.

### Extrait de pin (Pinus pinaster)

L'extrait de pin selon la présente invention appartient au genre Pinus et peut être un Pin maritime ou pin des Landes (*Pinus pinaster*) ou un Pin sylvestre (*Pinus sylvestris*)*.*

Préférentiellement, l'extrait est un extrait de l'espèce *Pinus pinaster.*

### Typiquement, l'extrait de pin pourra être obtenu à partir des aiguilles, des bourgeons, de l'écorce ou de la résine

Préférentiellement, l'extrait de pin est obtenu à partir de l'écorce de *Pinus pinaster.*

D'après la littérature (Jerez M & al, Eur Food Res Technol, 229, 651-659, 2009), les principaux polyphénols de l'écorce de pin maritime appartiennent aux classes phytochimiques suivantes :
- Acides hydroxycinnamiques et leurs glycosides (acide caféique, acide férulique, acide paracoumarique etc)
- Acides hydroxybenzoïques (acide gallique)
- oligomères procyanidoliques (catéchine, procyanidols dimères, trimères etc)
- flavonoïdes monomères et leurs glycosides (taxifoliol).

L'extrait d'écorce de pin selon l'invention est riche en oligomères procyanidoliques

Le taux d'oligomères procyanidoliques est supérieur ou égal à 30% de l'extrait. La somme de la catéchine et procyanidol dimère B3 ne doit pas être inférieur à 17%. Les acides phénoliques, hydroxy cinnamiques et le taxifoliol sont présents en quantités très faibles en dépassant pas 3%.

Les principaux constituants de l'extrait d'écorce de pin maritime selon l'invention sont quantifiés par chromatographie liquide haute performance en phase inverse avec détection par absorption ultraviolette.

Selon un mode de réalisation, l'extrait d'écorce de pin est fabriqué à partir de l'écorce de pin maritime séchée et broyée, suivi d'une extraction solide/liquide initiale à l'eau, puis d'une récupération de la phase aqueuse par filtration. La purification est effectuée par extraction sélective liquide/liquide et séchage.

### Cacahuète (Arachis hypogaea)

L'extrait cacahuète selon la présente invention appartient au genre Arachis.

Préférentiellement, l'extrait est un extrait de l'espèce *Arachis hypogaea.L.*

Typiquement, l'extrait *d'Arachis hypogaea.L.* pourra être obtenu à partir de la pellicule ou peau de la cacahuète.

Selon la littérature (Bonnaillie C & al, Revue de génie industriel, 7, 35-45, 2012), la pellicule de la graine d'arachide (Arachis hypogaea L) contient des polyphénols appartenant aux trois groupes ci-dessous :
- Acides phénoliques (acide gallique, acide caféique, acide chlorogénique) ;
- hydroxystilbènes (trans-resveratrol)
- flavonoïdes (monomères et oligomères de flavan-3-ols) ou OPC.

Le taux d'oligomères procyanidoliques est supérieur ou égal à 30% de l'extrait

Les flavonoïdes ou oligomères procyanidoliques qui sont les constituants majoritaires des composés phénoliques de la pellicule d'arachide possèdent une structure de base de type 2 - phénylchromane.

Ces OPC sont composés majoritairement d'oligomères appartenant à la série A (1 liaison interflavanique et 3 liaisons éthers par dimère). Les oligomères de la série B (1 liaison interflavanique C4-C8 ou C4-C6 et 2 liaisons éthers par dimère) sont présents mais en faibles quantité.

L'extrait de cacahuète est obtenu à partir des pellicules sèches de cacahuètes qui sont traitées soit à température ambiante ou à chaud avec des solvants tel que l'eau, des solvants organiques tels que l'éthanol, l'acétone, un mélange eau/solvants organiques dans des proportions variables. L'extrait liquide obtenu est concentré par des moyens appropriés (évaporation sous pression réduite) pour réduire et/ou éliminer les solvants organiques. Le résidu de concentration subit des opérations d'enrichissement en composés phénoliques d'intérêt. Une étape de purification par extraction liquide/liquide est réalisée, puis une étape de séchage.

Selon un mode de réalisation, les extraits selon l'invention sont en solution dans de l'eau ou dans au moins un solvant hydrophile comme par exemple les mono-alcools inférieurs linéaires ou ramifiés ayant de 1 à 8 atomes de carbone, comme l'éthanol, le propanol, le butanol, l'isopropanol, l'isobutanol ; les polyols tels que le propylène glycol, l'isoprène glycol, le butylène glycol, le propylène glycol, le glycérol, le sorbitol, les polyéthylènes glycol et leurs dérivés, et leurs mélanges.

### Activateur

On entend par « activateur de produit pesticide », toute substance ou produit permettant de maintenir l'efficacité du produit pesticide, tout en diminuant la dose de produit pesticide. Typiquement, on parle d'effet activateur lorsque l'activateur, tout en maintenant l'efficacité du produit pesticide, permet de diminuer la dose de produit pesticide d'au moins 10%, préférentiellement d'au moins 20%, préférentiellement d'au moins 25%. Préférentiellement encore, on parle d'effet activateur lorsque l'activateur, tout en maintenant l'efficacité du produit pesticide, permet de diminuer la dose de produit pesticide d'au moins 50%, et de manière encore plus préférée, lorsque la dose est diminuée d'au moins 75%, tout en maintenant la même efficacité. Dans certains modes de réalisation, l'activateur permet de rendre actif un produit pesticide à des doses où il n'aurait pas d'efficacité utilisé seul.

Cet effet activateur permet avantageusement de se mettre en conformité avec les critères d'innocuités établis par le règlement européen (UE) n°528/2012.

On entend par efficacité d'un produit pesticide, le fait de détruire, repousser ou rendre inoffensifs les organismes nuisibles, à en prévenir l'action ou à les combattre de toute autre manière par une action autre qu'une simple action physique ou mécanique.

A titre illustratif, il s'agira d'obtenir la même mortalité chez des termites lorsque le produit insecticide est utilisé seul et lorsque le produit insecticide est utilisé à une plus faible dose en combinaison avec un extrait selon l'invention

A titre illustratif toujours, on entend par efficacité, l'obtention de 100% de « knock-down » ou étourdissement, des insectes à 2 heures, préférentiellement l'obtention de 100% de « knock-down » des insectes à 1 heure. Ou encore, on entend par efficacité, l'obtention de 100% de mortalité des insectes à 48h, préférentiellement l'obtention de 100% de mortalité des insectes à 24H.

### Produits de protection du bois et produits de lutte anti-nuisibles du bois

Selon un **deuxième aspect,** la présente invention concerne également des produits de protection du bois ainsi que des produits anti-nuisibles du bois.

Selon le règlement européen (UE) n°528/2012, les produits de protection (ou préservation) du bois sont les produits utilisés pour protéger le bois ou les produits du bois, par la maîtrise des organismes qui détruisent ou déforment le bois, y compris les insectes. Ce type de produits comprend à la fois les produits de traitement préventif et curatif. Les produits de préservation (ou protection) du bois sont appliqués sur le bois ou produit du bois.

Les produits de lutte anti-nuisibles du bois concernent également les produits utilisés pour protéger le bois ou les produits du bois par la maîtrise des organismes qui détruisent ou déforment le bois, y compris les insectes. Les produits de luttes anti-nuisibles ne sont cependant pas appliqués sur le bois ou produit du bois mais sur toute autre surface, de manière à protéger ou traiter le bois ou produit du bois. Ce type de produits comprend également les produits de traitement préventif et curatif.

On entend par bois ou produit du bois, tout bois ou matériau à base de ou comprenant du bois. A titre illustratif, on citera du bois provenant de scieries, y compris pendant la phase de transformation dans la scierie, les grumes, des charpentes, des poutres, des matériaux de constructions, des meubles, des bardages, des matériaux à base de fibres de bois, de l'OSB (« oriented strand board »), du contreplaqué, un solivage intérieur, une terrasse, des aménagements extérieurs, des piquets et retenus de terre, du parquet, des revêtements intérieurs à partir de matériau bois.

On entend par surface, toute surface autre que du bois ou un produit du bois. Typiquement, le produit pourra être appliqué dans les murs porteurs, des cloisons, des murs mitoyens et des murs doublés et/ou sur le sol pour fournir une barrière chimique continue dans le sol entourant une structure (résidentielles, industrielle ou agricole) et/ou sous cette structure, sur le pourtour et le fond des fondations, sur le pourtour et le fond des excavations, dans les tranchées, dans les espaces vides, les fissures, les crevasses, les vides sanitaires, les zones difficiles d'accès, les sous-sols et similaires....

Selon un mode de réalisation, le produit de protection du bois ou de lutte anti-nuisibles du bois comprend un extrait de pépins de raisin et/ou un extrait d'écorce de pin et/ou un extrait de pellicule de cacahuète, et au moins un produit insecticide et/ou fongicide, ledit au moins un produit insecticide et/ou fongicide étant présent dans le produit en une teneur comprise entre 0.001 et 5% en poids, par rapport au poids total du produit, préférentiellement entre 0.01 et 2 % en poids, par rapport au poids total du produit, et ledit ou lesdits extraits étant présent(s) dans le produit en une teneur comprise entre 0.05 et 5% en poids, par rapport au poids total du produit, préférentiellement entre 0.05 et 2% en poids, par rapport au poids total du produit et de manière préférée, à environ 0.2% en poids, par rapport au poids total du produit.

### Compositions insecticides, répulsives ou fongicides

Selon le règlement européen (UE) n°528/2012, les compositions insecticides sont utilisées pour lutter contre arthropodes tels que les insectes par d'autres moyens qu'en les repoussant ou en les attirant.

Selon le règlement européen (UE) n°528/2012, les répulsifs et appâts s'entendent des produits utilisés pour lutter contre les organismes nuisibles en les repoussant ou en les attirant, y compris les produits utilisés, pour l'hygiène humaine ou vétérinaire, directement sur la peau ou indirectement dans l'environnement de l'homme ou des animaux.

Les compositions fongicides sont utilisées pour lutter contre les champignons et les champignons xylophages par d'autres moyens qu'en les repoussant ou en les attirant.

Ces termes s'appliquent à tous les organismes nuisibles, hors nuisibles du bois.

Selon un mode de réalisation, la composition insecticide comprend un extrait de pépins de pépins de raisin et/ou un extrait d'écorce de pin et/ou un extrait de pellicule de cacahuète, et au moins un produit insecticide, ledit au moins un produit insecticide étant présent dans la composition en une teneur comprise entre 0.001 et 5% en poids, par rapport au poids total de la composition, préférentiellement entre 0.01 et 1% en poids, par rapport au poids total de la composition, et ledit ou lesdits extraits étant présent(s) dans la composition en une teneur comprise entre 0.05 et 5% en poids, par rapport au poids total de la composition, préférentiellement entre 0.05 et 2% en poids, par rapport au poids total de la composition et de manière préférée, à environ 0.2% en poids, par rapport au poids total de la composition.

Selon un mode de réalisation, la composition répulsive comprend un extrait de pépins de pépins de raisin et/ou un extrait d'écorce de pin et/ou un extrait de pellicule de cacahuète, et au moins un produit insecticide, ledit au moins un produit insecticide étant présent dans la composition en une teneur comprise entre 0.001 et 5% en poids, par rapport au poids total la composition préférentiellement entre 0.01 et 1% en poids, par rapport au poids total de la composition, et ledit ou lesdits extraits étant présent(s) dans la composition en une teneur comprise entre 0.05 et 5% en poids, par rapport au poids total la composition, préférentiellement entre 0.05 et 2% en poids, par rapport au poids total de la composition et de manière préférée, à environ 0.2% en poids, par rapport au poids total de la composition.

Selon un mode de réalisation, la composition fongicide comprend un extrait de pépins de pépins de raisin et/ou un extrait d'écorce de pin et/ou un extrait de pellicule de cacahuète, et au moins un produit fongicide, ledit au moins un produit fongicide étant présent dans la composition en une teneur comprise entre 0.001 et 5% en poids, par rapport au poids total de la composition, préférentiellement entre 0.01 et 1% en poids, par rapport au poids total de la composition, et ledit ou lesdits extraits étant présent(s) dans le produit en une teneur comprise entre 0.05 et 5% en poids, par rapport au poids total de la composition, préférentiellement entre 0.05 et 2% en poids, par rapport au poids total de la composition et de manière préférée, à environ 0.2% en poids, par rapport au poids total de la composition.

### Forme galénique

Les produits, compositions, répulsifs ou appâts selon l'invention pourront se présenter sous toute forme communément utilisée dans ce domaine tel que des gels, des aérosols, des solutions aqueuses, hydroalcooliques ou huileuses, des solutions solvantées, des compositions anhydres ou solides, des émulsions huile-dans-eau ou eau-dans huile, des nano-émulsions, des microémulsions, des pastilles solides, des poudres ou granules dispersables.

Typiquement, les insecticides se présentent sous forme d'aérosol ou de gel.

Typiquement, les produits de protection du bois, les produits de lutte anti-nuisibles du bois et les compositions fongicides se présentent sous forme de gel.

On entend par « gel » au sens de la présente demande, une composition dont la viscosité est comprise entre 50 0000 cP et 2 400 000 cP, préférentiellement entre700 0000 cPet2 400 000 cP à température ambiante.

La viscosité peut être mesurée par tout viscosimètre et par toute méthode connue de l'homme du métier.

Typiquement, la viscosité de la composition pourra être mesurée par tout viscosimètre Brookfield analogique. A titre illustratif, la viscosité a été mesurée à température ambiante, avec un viscosimètre Brookfield analogique, avec un rotor 6, à la vitesse 0.3 rpm.

La mesure de la viscosité est réalisée sur l'échantillon resté à température ambiante.

Selon un mode de réalisation préféré, la composition biocide selon l'invention est sous forme de gel aqueux.

Typiquement, les répulsifs ou appâts se présentent sous forme d'aérosol ou de composition anhydre ou solide.

Les produits, compositions, répulsifs ou appâts ci-avant décrits pourront comprendre en outre au moins un agent supplémentaire choisi parmi les surfactants non-ioniques, les anti-mousses, les surfactants anioniques, les polymères hydrosolubles, les agents chélatants, les acides, les conservateurs, les cires, les émulsions cireuses, les tensioactifs cationiques, les insecticides, les extraits végétaux, les antioxydants, les fongicides, les éthers de cellulose, les iso-alcanes, un mélange d'alkoxysilane et de disiloxane, les agents luminescents, les additifs anti-UV, les agents taguants, des co-solvants biosourcés tels que ceux de la gamme Augeo^{®} commercialisés par la société Solvay et ceux de la gamme Isane Biolife^{®} commercialisés par la société Total Energies.

Parmi les surfactants non ioniques on citera les alcools éthoxylés, les huiles éthoxylées, les alkylpolyglucosides, les ammonium éthoxylées, les surfactants non ioniques peu moussants, les polyalkylène glycols, les blocks copolymers.

Parmi les surfactants anioniques on citera les éther sulfates d'alcool gras, les sulfates d'alcool gras, les sulfonates d'alkyl benzène linéaire.

Parmi les polymères hydrosolubles on citera les agents dispersants, les épaississants.

Parmi les agents chélatants, on citera l'acide éthylène diamine tétraacétique (EDTA), le sel tétrasodique de l'acide N,N-dicarboxyméthyl glutamique (GLDA), l'acide diéthylène triamine penta acétique (DTPA), l'acide (2-hydroxyéthyl) éthylène diamine triacétique (HEDTA), l'acide nitrilotriacétique (NTA), l'acide propylène diamine tétra acétique (PDTA), l'éthanol glycine (EDG), le glucoheptonate, le gluconate de sodium, et l'acide gluconique,...

Parmi les conservateurs, on citera le Bronopol, l'acide formique, le glutaraldéhyde, le glyoxal, le n-propanol, le phénoxyéthanol, le Dichlorohydroxydiphenylether (DCPP).

Parmi les éthers de cellulose, on citera la méthylcellulose, l'éthylcellulose, l'hydroxyéthylcellulose, l'hydroxyéthylcellulose modifiée, l'hydroxypropyl cellulose, l'hydroxyéthyl méthyl cellulose, l'hydroxypropyl méthyl cellulose et la carboxyméthylcellulose.

Dans un mode de réalisation, les produits, compositions, répulsifs ou appâts selon l'invention ne contiennent pas d'EDTA.

Parmi les iso-alcanes, on citera les iso-alcanes en C8-C18 (appelées aussi isoparaffines) comme l'isoalcane en C11-C12, l'isoalcane en C11-C13, l'isoalcane en C15-C18, l'isoalcane en C15-C16, l'isoalcane en C17-C18, l'isoalcane en C17-C18 ou leur mélange. Typiquement, les iso-alcanes renouvelables de la gamme Biolife de la société Total pourront être utilisés.

Ces ingrédients sont préférentiellement biosourcés.

Selon un mode de réalisation, les produits ou compositions se présentent sous forme de gel.

Selon un mode de réalisation, les produits ou compositions sont sous forme de gel aqueux et comprennent au moins un isoalcane, au moins un ester de cellulose, au moins un extrait de d'écorce de pin et/ou d'extrait de pépins de raisin et/ou de pellicule de cacahuète, au moins un mélange d'alkoxysilane et de disiloxane et de l'eau.

### Procédé de traitement curatif et/ou préventif du bois

Selon un **troisième aspect,** la présente invention concerne un procédé de traitement curatif et/ou préventif de préservation du bois ou de lutte anti-nuisibles du bois au moyen d'un produit de préservation du bois ou de lutte anti-nuisibles du bois, ledit produit comprenant au moins un extrait de plante ayant une teneur en oligomères procyanidoliques supérieure ou égale à 30% en poids, par rapport au poids total de l'extrait de plante, et au moins un produit insecticide et/ou fongicide, ledit procédé comprenant l'étape consistant à appliquer ledit produit sur le bois à traiter et/ou sur une surface.

On entend par traitement préventif, tout traitement permettant d'empêcher le bois sain d'être infecté par les agents de dégradation du bois tels les organismes nuisibles du bois (insectes xylophages et champignons xylophages). Le traitement préventif comprend le traitement temporaire des grumes, le traitement des sciages frais, le traitement anti-bleuissement en service, le traitement selon les classes d'emplois du bois en Europe et selon les classes de danger dans les autres zones du Monde (USA, Australie, etc), le traitement des panneaux de structure. Dans les classes d'emploi, on différencie les usages du bois en intérieur, en extérieur (hors sol, dans le sol).

En plus du traitement préventif du bois par application du produit sur le bois, une barrière insecticide ou fongicide peut être utilisée pour isoler les organismes nuisibles du bois d'accéder au bâtiment contenant du bois. On parle alors de lutte anti-nuisibles du bois. Ce système est généralement installé entre le sol et la construction pour garder les organismes nuisibles du bois à l'extérieur et éliminer ceux qui entrent en contact avec l'insecticide ou le fongicide. Ce traitement préventif concerne les constructions neuves et existantes (résidentielles, industrielles ou agricoles).

On entend par traitement curatif, tout traitement visant à détruire ou rendre inoffensifs les insectes nuisibles du bois, ou au moins à améliorer la condition. Le traitement curatif s'entend par exemple du traitement d'une infestation d'organismes nuisibles du bois tels que des termites et comprend la destruction de ces nuisibles ou a minima l'arrêt du développement ou la régression de l'infestation. Ce traitement curatif concerne les bois mis en oeuvre mais également les constructions existantes.

Typiquement, l'extrait sera choisi parmi les espèces *Vitis vinifera L, Pinus pinaster, Arachis hypogaea.*

On entend par bois ou produit du bois, tout bois ou matériau à base de ou comprenant du bois. A titre illustratif, on citera du bois provenant de scieries, y compris pendant la phase de transformation dans la scierie, les grumes, des charpentes, des poutres, des matériaux de constructions, des meubles, des bardages, des matériaux à base de fibres de bois, de l'OSB (« oriented strand board »), du contreplaqué, un solivage intérieur, une terrasse, des aménagements extérieurs, des piquets et retenus de terre, du parquet, des revêtements intérieurs à partir de matériau bois.

On entend par surface, toute surface autre que du bois ou un produit du bois. Typiquement, le produit pourra être appliqué dans les murs porteurs, des cloisons, des murs mitoyens et des murs doublés et/ou sur le sol pour fournir une barrière chimique continue dans le sol entourant une structure (résidentielles, industrielle ou agricole) et/ou sous cette structure, sur le pourtour et le fond des fondations, sur le pourtour et le fond des excavations, dans les tranchées, dans les espaces vides, les fissures, les crevasses, les vides sanitaires, les zones difficiles d'accès, les sous-sols et similaires....

Selon un mode de réalisation, l'application sera réalisée par aspersion, flow-coating, trempage, badigeonnage, injection, injection manuelle, aérosol, pulvérisation, vaporisation, imprégnation, imprégnation profonde par autoclave double-vide ou vide et pression.

### Selon un mode de réalisation, dans le cadre d'un traitement curatif, l'application sera préférentiellement réalisée par injection, pulvérisation, vaporisation ou badigeonnage

Selon un mode de réalisation, dans le cadre d'un traitement préventif, l'application sera préférentiellement réalisée par aspersion, flow-coating, trempage badigeonnage, imprégnation, ou imprégnation profonde par autoclave double-vide ou vide et pression.

Typiquement, dans le cadre d'un traitement préventif ou curatif de meubles, l'application sera réalisée préférentiellement par badigeonnage, injection manuelle, aérosol ou pulvérisation.

Dans le cas d'une application, dans le sol, trois méthodes courantes d'application de produits de luttes anti-nuisibles du bois aux sols sont la pulvérisation à la volée, l'injection sous-dalle et le creusement de tranchées/tiges. Un pulvérisateur généralisé à basse pression peut être utilisé pour appliquer le produit de lutte anti-nuisibles du bois comme traitement de préconstruction avant le coulage des dalles ou comme traitement de préconstruction des vides sanitaires inaccessibles ou comme traitement de postconstruction couplé à une injection dans les murs ...

Ainsi, et selon un mode de réalisation, la présente invention concerne un procédé de traitement préventif des constructions au moyen d'un produit de lutte anti-nuisibles du bois, ledit produit comprenant au moins un extrait de plante ayant une teneur en oligomères procyanidoliques supérieure ou égale à 30% en poids, par rapport au poids total de l'extrait de plante, ledit procédé comprenant l'étape consistant à appliquer ledit produit par pulvérisation à la volée, injection sous-dalle ou par le creusement de tranchées/tiges.

Selon un autre mode de réalisation, un film peut être imprégné d'un produit de lutte anti-nuisibles. Ainsi, selon un mode de réalisation, la présente invention concerne un procédé de traitement des constructions au moyen d'un produit de lutte anti-nuisibles du bois, ledit produit comprenant au moins un extrait de plante ayant une teneur en oligomères procyanidoliques supérieure ou égale à 30% en poids, par rapport au poids total de l'extrait de plante, ledit procédé comprenant l'étape consistant à appliquer ledit produit sur un film et à déposer ledit film à une surface.

Typiquement, le film pourra être un film en matériau polymère.

Typiquement, le film sera imprégné d'un ou des extraits selon l'invention et sera appliqué, par exemple, sur le pourtour et le fond des excavations, ou sur le pourtour ou sur les fondations d'une maison, de manière à agir comme une barrière physico-chimique contre les termites.

Selon un autre mode de réalisation, le produit de luttes anti-nuisibles du bois pourra être intégré dans un piège anti-nuisibles ou un objet connecté.

L'homme du métier connait ces traitements et saura comment les appliquer en fonction de l'application souhaitée.

Les produits de protection du bois et de lutte anti-nuisibles du bois sont tels que ci-avant décrits.

### Procédé de lutte contre les nuisibles

Selon un **quatrième aspect,** la présente invention concerne un procédé de lutte contre les nuisibles au moyen d'une composition insecticide et/ou une composition répulsive et/ou une composition fongicide, ladite ou lesdites composition(s) comprenant au moins un extrait de plante ayant une teneur en oligomères procyanidoliques supérieure ou égale à 30% en poids par rapport au poids total de l'extrait de plante, et au moins un produit insecticide et/ou fongicide, ledit procédé comprenant l'étape consistant à appliquer ladite ou lesdites composition(s) sur la surface à traiter.

On entend par nuisibles ici, tous les nuisibles autres que les nuisibles du bois.

Typiquement, l'extrait sera choisi parmi les espèces *Vitis vinifera L, Pinus pinaster, Arachis hypogaea.*

Typiquement, l'application sera réalisée par, trempage, badigeonnage, injection, pulvérisation, vaporisation, imprégnation.

On entend par « procédé de lutte contre les nuisibles », les procédés curatifs et préventifs.

Dans le cadre d'un procédé curatif, la surface à traiter s'entend de manière large et s'applique, dans le cas d'une composition insecticide ou fongicide, à toute surface comprenant au moins un organisme nuisible. A titre illustratif, on peut citer la surface d'un sol, la surface d'un mobilier, la surface d'un matériau, la surface d'un plan de travail, l'encadrement d'une fenêtre mais également la surface de la peau d'un être humain ou d'un animal, la surface d'un textile, la surface du linge de maison, ...

Préférentiellement, l'application sera réalisée par pulvérisation ou vaporisation des compositions décrites, sous forme d'aérosol.

A titre illustratif, les compositions insecticides pourront être appliquées grâce à un aérosol, durant 2 secondes à une distance de 60 centimètres des insectes.

Dans le cadre d'une procédé répulsif, la surface s'entend également de manière large et s'applique à toute surface sur laquelle des organismes nuisibles sont susceptibles d'être présents à savoir la surface d'un sol, la surface d'un mobilier, d'un matériau, d'un plan de travail, un encadrement de fenêtre, mais également la surface de la peau d'un être humain ou d'un animal, la surface d'un textile, la surface du linge de maison, ...

Le procédé de lutte contre les nuisibles s'entend d'un usage agricole (traitement des cultures, des denrées alimentaires (stockage, transport), des récoltes et non agricole

Ainsi, les surfaces peuvent également être des cultures, des récoltes, des denrées alimentaires, des jardins, ...

Les produits de lutte contre les nuisibles sont tels que ci-avant décrits.

### Kit insecticide, fongicide, pour la protection du bois ou pour la lutte anti-nuisibles du bois

Selon un **cinquième aspect,** la présente invention concerne un kit insecticide ou fongicide, pour la protection du bois ou pour la lutte anti-nuisibles du bois, comprenant d'une part un extrait de plante ayant une teneur en oligomères procyanidoliques supérieure ou égale à 30% en poids, par rapport au poids total de l'extrait de plante et d'autre part, un insecticide choisi parmi la thiaclopride, la cyperméthrine, la perméthrine, le diflubenzuron, la bifenthrine, la deltaméthrine, l'imiprothrine, la D-alléthrine, le Piperonyl Butoxide, le Geraniol, la d-tetramethine, l'extrait de poivre, l'esbiothrine, la pralléthrine, le chlorfénapyr, le cyanamide, le chrysantheum et/ou un fongicide choisi parmi les fongicides de la famille des triazoles tels que le propiconazole, le tébuconazole, le cyproconazol, le 3-iodo-2-propynylbutylcarbamate (IPBC), le penfluflen, le fenpropimorphe, les ammoniums quaternaires et les sels d'ammonium quaternaires, on peut citer le chlorure d'alkyldiméthylbenzylammonium (ADBAC, BKC), le cation tétraméthylammonium (TMAC), le N-(3-aminopropyl)-N-dodecylpropane-1,3-diamine (diamine), le propionate de N,N-Didecyl-N-methyl-poly(oxyethyl) ammonium (Bardap26), le chlorure de didécyldiméthylammonium (DDAC) et leurs mélanges, les microorganismes.

Selon un mode de réalisation, l'insecticide est choisi parmi choisi parmi la cyperméthrine, la perméthrine, le diflubenzuron, la bifenthrine, la deltaméthrine, le fipronil, l'imiprothrine, le Piperonyl Butoxide, le Geraniol, la d-tetramethine, l'extrait de poivre, la pralléthrine, le chlorfénapyr, le cyanamide, le chηsantheum et leurs mélanges.

### Exemples

### Exemple 1 : Démonstration de l'effet activateur des molécules pesticides des extraits de pépins de raisin et d'écorce de pin selon l'invention - Test sur les termites selon la norme EN117:2005

### Matériels et Méthode

Afin de déterminer l'efficacité en tant que produit de protection du bois des produits testés contre l'espèce de termites *Reticulitermes,* des blocs de bois traités par les produits ou leur combinaison ont été introduits dans des bocaux comprenant 50 termites, pendant deux semaines. Le nombre de termites à l'issu de l'essai a été comptabilisé.

L'activité insecticide des extraits de pépins de raisin, d'écorce de pin et de la cyperméthrine à l'encontre des termites a été testée. Les résultats sont répertoriés dans le tableau 1. L'activité insecticide de l'association d'un extrait de pépins de raisin avec la cyperméthrine et de l'association d'un extrait d'écorce de pin avec la cyperméthrine a également été testée à l'encontre des termites, démontrant l'effet activateur de extraits selon l'invention. Les résultats sont répertoriés dans le tableau 1. Un solvant est utilisé en tant que contrôle.

### Extraits

Les extraits sous forme de poudre ont été mis en solution dans eau. Les extraits utilisés sont un extrait d'écorce de pin, un extrait de pépins de raisin dont la somme des flavanols monomères se situe entre 18 et 32%, et celle des flavanols dimères est entre 30 et 40%, et un extrait de pépins de raisin, dont la somme des flavanols monomères se situe entre 5 et 7% de l'extrait, et celle des flavanols dimères est entre 5 et 7%. La teneur en oligomères procyanidoliques des extraits est supérieure à 30%

### Résultats

**[Tableau 1]**

| Produit testé | Niveau de dégradation du bloc de bois (0-4)* | Nombre de termites vivantes (sur 50 termites) |
|---|---|---|
| Extrait d'écorce de pin (4%) | 3 | 36 |
| | 3 | 34 |
| | 3 | 32 |
| Extrait de pépins de raisin (4%) | 4 | 37 |
| | 4 | 43 |
| | 4 | 37 |
| Extrait de pépins de raisin (4%) | 2 | 39 |
| | 3 | 35 |
| | 3 | 37 |
| Cyperméthrine 28,6g/m³ | 0 | 0 |
| | 0 | 3 |
| | 1 | 9 |
| Contrôle (solvent) | 4 | 40 |
| | 3 | 42 |
| | 4 | 44 |

| | | |
|---|---|---|
| * Le niveau acceptable de dégradation du bois pour conclure à l'efficacité du produit testé est noté 0 ou 1 sur une échelle de 0 à 4, 0 s'entendant du niveau non dégradé. | | |

La cyperméthrine est une substance pesticide connue et permet d'éradiquer les termites et préserver le bois. La cyperméthrine possède donc une activité curative à l'encontre des termites. En revanche, les extraits selon l'invention ne permettent pas d'éradiquer les termites ni de préserver le bois.

**[Tableau 2]**

| Produit testé | Niveau de dégradation du bloc de bois (0-4)* | Nombre de termites vivantes (sur 50 termites) |
|---|---|---|
| Extrait d'écorce de pin (4%) + cyperméthrine 15.8 g/m³ | 1 | 0 |
| | 2 | 9 |
| | 2 | 23 |
| Extrait de pépins de raisin (4%) + cyperméthrine 15.8 g/m³ | 1 | 0 |
| | 1 | 12 |
| | 1 | 0 |
| Cyperméthrine 15,8g/m³ | 3 | 37 |
| | 4 | 31 |
| | 4 | 21 |
| Cyperméthrine 33,0g/m³ | 0 | 0 |
| | 0 | 14 |
| | 1 | 0 |

| | | |
|---|---|---|
| * Le niveau acceptable de dégradation du bois pour conclure à l'efficacité du produit testé est noté 0 ou 1 sur une échelle de 0 à 4, 0 s'entendant du niveau non dégradé. | | |

Avantageusement, les extraits selon l'invention permettent de diminuer par deux la dose de cyperméthrine tout en maintenant son activité pesticide. Ainsi, les extraits selon l'invention permettent avantageusement d'activer la cyperméthrine. En effet, à une dose de 15,8g/m³, la cyperméthrine n'a pas d'activité pesticide. L'ajout d'un extrait de pépins de raisin ou d'écorce de pin à cette même dose de cyperméthrine permet d'obtenir l'effet pesticide et de protection du bois, à un niveau similaire à celui de la cyperméthrine à 33,Og/m^{3,} alors que ces extraits n'ont pas d'effet pesticide en tant que tel.

### Exemple 2 : Démonstration de l'effet activateur des molécules pesticides, des extraits de pépins de raisin selon l'invention - Tests sur les insectes rampants et les insectes volants

### Essais comparatifs sur des insectes rampants

Dans les exemples qui vont suivre, des essais comparatifs ont été menés sur 4 espèces d'insectes rampants (*Blatella germanica, Blatta orientalis, Periplaneta americana et Lasius Niger*)*.* Pour chaque espèce ont été testées :
- une dose « 100% », correspond à une dose d'une substance pesticide (100% de substance pesticide)
- une dose « x% + AO », correspond à x% d'une dose de substance pesticide couplée à un extrait de pépins de raisin.

Pour chaque espèce, le test a été mené sur 10 insectes et a été réalisé 5 fois. Les produits ont été appliqués grâce à un aérosol, durant 2 secondes à une distance de 60 centimètres des insectes. La température est d'environ 25°C et l'humidité relative est comprise entre 30 et 47%. Le temps pour obtenir un « knock down » des insectes ainsi que le pourcentage de « knock-down » à 2 heures et la mortalité à 24 heures et 48 heures ont été évalués.

Dans cet exemple, l'extrait de pépins de raisin est intégré sous sa forme poudre dans le produit formulé avec les insecticides.

### Formulation aqueuse pour aérosol : Imiprothrine + cyperméthrine + extrait de pépins de raisin selon l'invention

Les doses testées sont les suivantes :
- une dose « 100% », correspond à une dose 0.07%m/m imiprothrine + 0.2%m/m cyperméthrine ;
- une dose « 50% + AO », correspond à une dose 50% [0.07%m/m imiprothrine + 0.2%m/m cyperméthrine] couplée avec un extrait de pépin de raisin.

Les résultats sont présentés dans le tableau 3 ci-après.

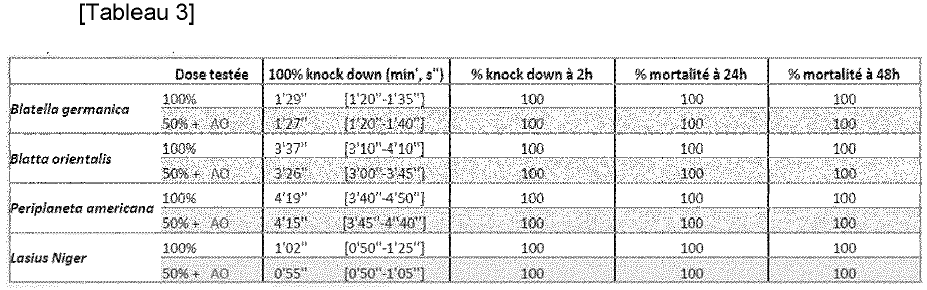

Avantageusement, l'extrait de pépin de raisin permet de diminuer de 50% la dose des substances pesticides et obtenir la même efficacité (100% de knock-down à 2h et 100% de mortalité à 24h).

### Formulation aqueuse pour aérosol : Deltaméthrine + D-Alléthrine + extrait de pépins de raisin

Les doses testées sont les suivantes :
- une dose « 100% », correspond à une dose 0,02%m/m Deltaméthrine+0,13%m/m d-Alléthrine ;
- une dose « 75% + AO », correspond à une dose 75% [0,02%m/m Deltaméthrine+0,13%m/m d-Alléthrine] couplée avec un extrait de pépin de raisin.
- une dose « 50% + AO », correspond à une dose 50% [0,02%m/m Deltaméthrine+0,13%m/m d-Alléthrine] couplée avec un extrait de pépin de raisin.
- une dose « 25% + AO », correspond à une dose 25% [0,02%m/m Deltaméthrine+0,13%m/m d-Alléthrine] couplée avec un extrait de pépin de raisin.

Les résultats sont présentés dans le tableau 4 ci-après.

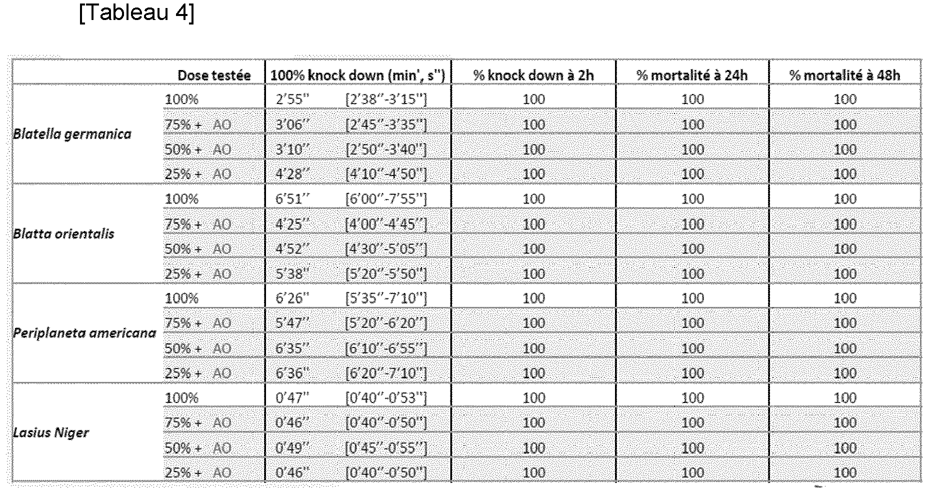

Avantageusement, l'extrait de pépins de raisin selon l'invention permet de diminuer jusqu'à 75% la dose des substances pesticides et obtenir la même efficacité (100% de knock-down à 2h et 100% de mortalité à 24h).

### Formulation aqueuse pour aérosol : D-Alléthrine + PBO+ extrait de pépins de raisin

Les doses testées sont les suivantes :
- une dose « 100% », correspond à une dose 0,25%m/m d-Alléthrine+0,5%m/m PBO;
- une dose « 75% + AO », correspond à une dose 75% [0,25%m/m d-Alléthrine+0,5%m/m PBO] couplée avec un extrait de pépin de raisin.
- une dose « 50% + AO », correspond à une dose 50% [0,25%m/m d-Alléthrine+0,5%m/m PBO] couplée avec un extrait de pépin de raisin.
- une dose « 25% + AO », correspond à une dose 25% [0,25%m/m d-Alléthrine+0,5%m/m PBO] couplée avec un extrait de pépin de raisin.

Les résultats sont présentés dans le tableau 5 ci-après.

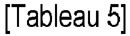

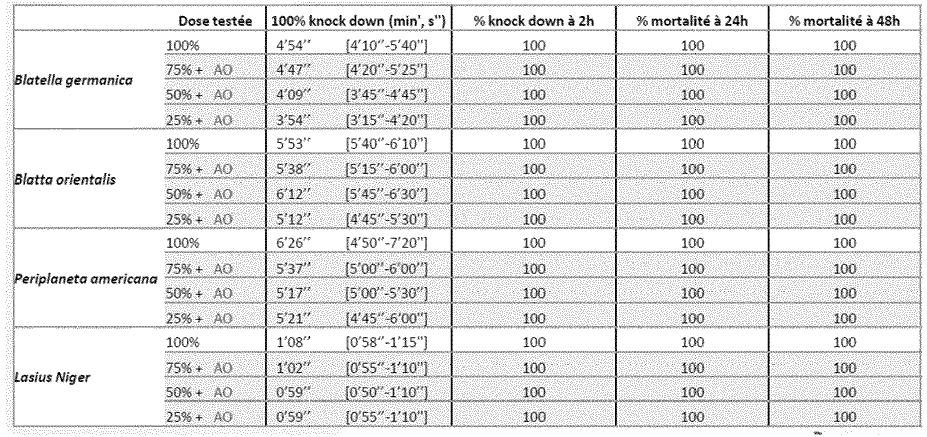

Avantageusement, l'extrait de pépins de raisin selon l'invention permet de diminuer jusqu'à 75% la dose des substances pesticides et obtenir la même efficacité (100% de knock-down à 2h et 100% de mortalité à 24h).

### Formulation aqueuse pour aérosol : Cyperméthrine + extrait de pépins de raisin

Les doses testées sont les suivantes :
- une dose « 100% », correspond à une dose 0,2%m/m Cyperméthrine;
- une dose « 75% + AO », correspond à une dose 75% [0,2%m/m Cyperméthrine] couplée avec un extrait de pépin de raisin.
- une dose « 50% + AO », correspond à une dose 50% [0,2%m/m Cyperméthrine] couplée avec un extrait de pépin de raisin.
- une dose « 25% + AO », correspond à une dose 25% [0,2%m/m Cyperméthrine] couplée avec un extrait de pépin de raisin.

Les résultats sont présentés dans le tableau 6 ci-après.

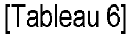

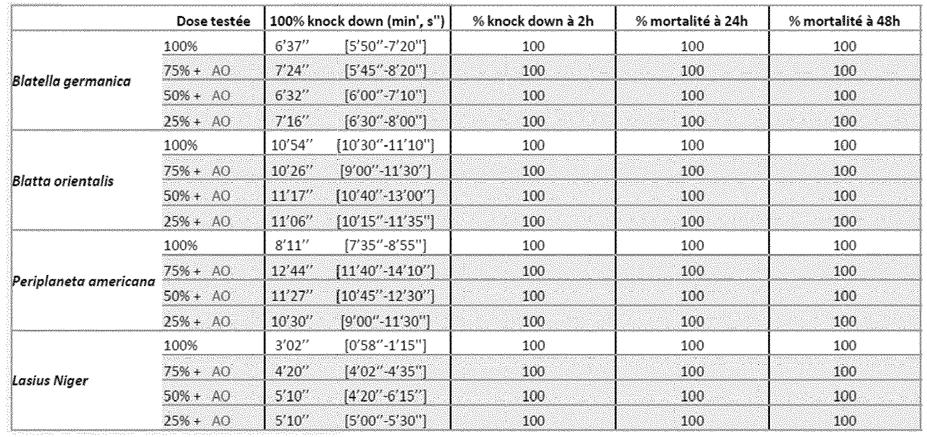

Avantageusement, l'extrait de pépins de raisin selon l'invention permet de diminuer jusqu'à 75% la dose des substances pesticides et obtenir la même efficacité (100% de knock-down à 2h et 100% de mortalité à 24h).

Ces résultats sont d'autant plus surprenants que l'extrait selon l'invention n'a peu ou pas d'efficacité sur les insectes rampants. Les résultats de l'extrait seul selon l'invention sont reproduits dans le tableau 7 ci-après :

**[Tableau 7]**

| | **Dose testée** | **100% knock down (min', s")** | **% knock down à 2h** | **% mortalité à 24h** | **% mortalité à 48h** |
|---|---|---|---|---|---|
| ***Blatella germanica*** | 100% | / | 0 | 0 | 8 |
| ***Blatta orientalis*** | 100% | / | 0 | 0 | 2 [0-10] |
| ***Periplaneta americana*** | 100% | / | 0 | 18 [0-30] | 26 [0-40] |
| ***Lasius Niger*** | 100% | / | 40 | 64 [40-90] | 76 [60-100] |

L'extrait selon l'invention ne permet pas d'obtenir un knock-down à 100% en 2 heures sur les 4 espèces d'insectes et encore moins une mortalité de 100% en 24h. Ainsi, l'extrait selon l'invention est un puissant activateur des substances insecticides et permet avantageusement de réduire les doses utilisées de ces substances.

### Essais comparatifs sur des insectes volants

Dans les exemples qui vont suivre, des essais comparatifs ont été menés sur 3 espèces d'insectes volants (*Aedes aegypti, Anopheles gambiae, Musca domestica*)*.* Pour chaque espèce ont été testées :
- une dose « 100% », correspond à une dose d'une substance pesticide (100% de substance pesticide)
- une dose « x% + AO », correspond à x% d'une dose de substance pesticide couplée à un extrait de pépins de raisin.

Pour chaque espèce, le test a été mené sur 20 insectes dans une chambre de 20m³ et a été réalisé 3 fois. Les produits ont été appliqués grâce à un aérosol, durant 2 secondes à une distance de 60 centimètres des insectes. La température est d'environ 25°C et l'humidité relative est comprise entre 47 et 55%. Le temps pour obtenir un « knock down » pour 10% des insectes (« KT10 »), pour 50% des insectes (« KT50 ») et pour 95% des insectes (« KT95 ») ainsi que le pourcentage de « knock-down » à 1 heures et la mortalité à 24 heures ont été évalués.

### Formulation aqueuse pour aérosol : Deltaméthrine + D-Alléthrine + extrait de pépins de raisin

Les doses testées sont les suivantes :
- une dose « 100% », correspond à une dose 0,02%m/m Deltaméthrine+0,13%m/m d-Alléthrine;
- une dose « 75% + AO », correspond à une dose 75% [0,02%m/m Deltaméthrine+0,13%m/m d-Alléthrine] couplée avec un extrait de pépin de raisin.
- une dose « 50% + AO », correspond à une dose 50% [0,02%m/m Deltaméthrine+0,13%m/m d-Alléthrine] couplée avec un extrait de pépin de raisin.
- une dose « 25% + AO », correspond à une dose 25% [0,02%m/m Deltaméthrine+0,13%m/m d-Alléthrine] couplée avec un extrait de pépin de raisin.

Les résultats sont présentés dans le tableau 8 ci-après.

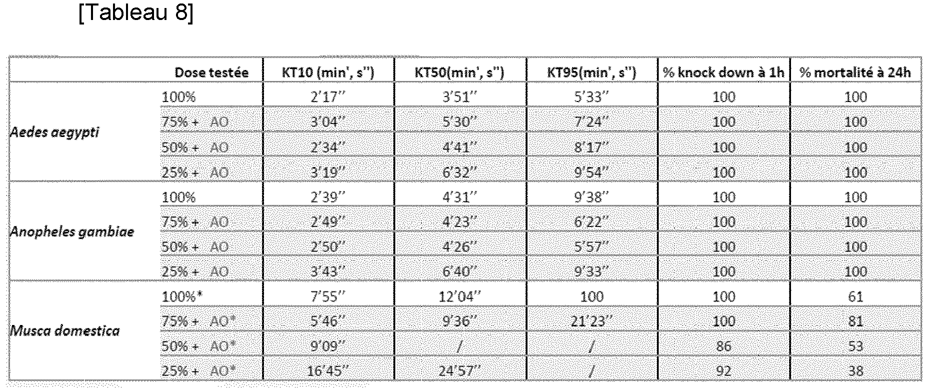

Avantageusement, l'extrait de pépins de raisin selon l'invention permet de diminuer jusqu'à 75% la dose des substances pesticides et obtenir la même efficacité (100% de knock-down à 1h et 100% de mortalité à 24h) pour les espèces *Aedes aegypti* et *Anopheles gambiae.* L'extrait selon l'invention permet de diminuer de 25% la dose des substances pesticides et obtenir la même efficacité pour l'espèce *Musca domestica.*

### Formulation aqueuse pour aérosol : D-Alléthrine + PBO+ extrait de pépins de raisin

Les doses testées sont les suivantes :
- une dose « 100% », correspond à une dose 0,25%m/m d-Alléthrine+0,5%m/m PBO;
- une dose « 75% + AO », correspond à une dose 75% [0,25%m/m d-Alléthrine+0,5%m/m PBO] couplée avec un extrait de pépin de raisin.
- une dose « 50% + AO », correspond à une dose 50% [00,25%m/m d-Alléthrine+0,5%m/m PBO] couplée avec un extrait de pépin de raisin.
- une dose « 25% + AO », correspond à une dose 25% [0,25%m/m d-Alléthrine+0,5%m/m PBO] couplée avec un extrait de pépin de raisin.

Les résultats sont présentés dans le tableau 9 ci-après.

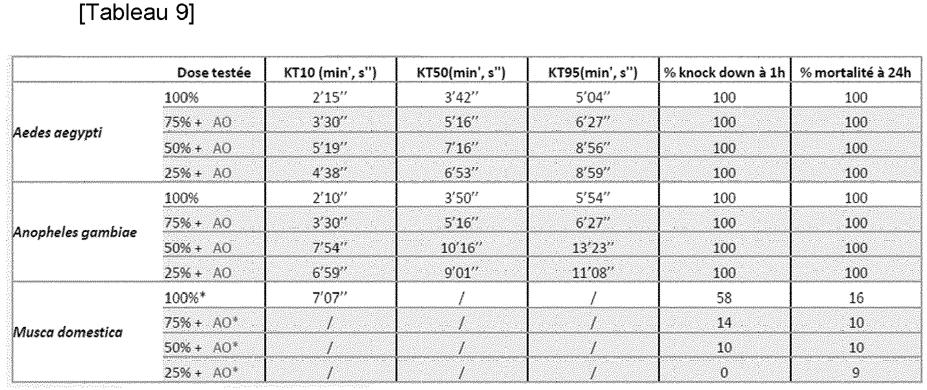

Avantageusement, l'extrait de pépins de raisin selon l'invention permet de diminuer jusqu'à 75% la dose des substances pesticides et obtenir la même efficacité (100% de knock-down à 1h et 100% de mortalité à 24h) pour les espèces *Aedes aegypti* et *Anopheles gambiae.*

### Formulation aqueuse pour aérosol : Cyperméthrine + extrait de pépins de raisin

Les doses testées sont les suivantes :
- une dose « 100% », correspond à une dose 0,2%m/m Cyperméthrine;
- une dose « 75% + AO », correspond à une dose 75% [0,2%m/m Cyperméthrine] couplée avec un extrait de pépin de raisin.
- une dose « 50% + AO », correspond à une dose 50% [0,2%m/m Cyperméthrine] couplée avec un extrait de pépin de raisin.
- une dose « 25% + AO », correspond à une dose 25% [0,2%m/m Cyperméthrine] couplée avec un extrait de pépin de raisin.

Les résultats sont présentés dans le tableau 10 ci-après.

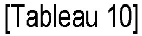

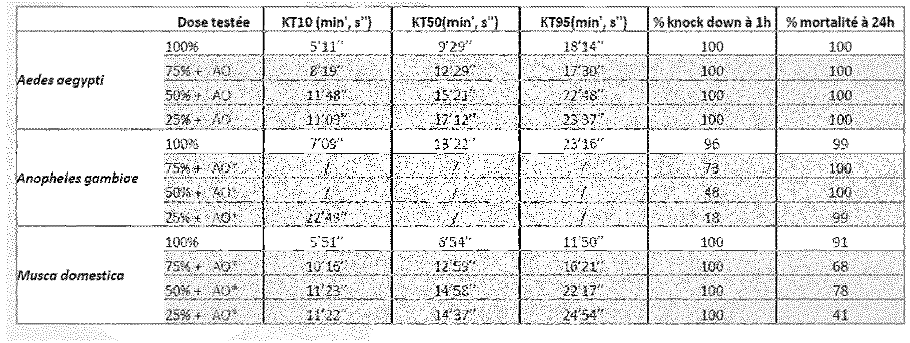

Avantageusement, l'extrait de pépins de raisin selon l'invention permet de diminuer jusqu'à 75% la dose des substances pesticides et obtenir la même efficacité (100% de knock-down à 1h et 100% de mortalité à 24h) pour l'espèce *Aedes aegypti.* L'extrait selon l'invention permet de diminuer jusqu'à 75% la dose des substances pesticides et obtenir la même efficacité (100% de mortalité à 24h) pour l'espèce *Anopheles gambiae* et la même efficacité (100% de knock-down à 1h) pour l'espèce *Musca domestica.*

Ces résultats sont d'autant plus surprenants que l'extrait selon l'invention n'a peu ou pas d'efficacité sur les insectes volants. Les résultats de l'extrait seul selon l'invention sont reproduits dans le tableau 11 ci-après :

**[Tableau 11]**

| | **Dose testée** | **KT10 (min', s")** | **KT50(min', s")** | **KT95(min', s")** | **% knock down à 1h** | **% mortalité à 24h** |
|---|---|---|---|---|---|---|
| ***Aedes aegypti*** | 100% | / | / | / | 0 | 6 |
| ***Anopheles gambiae*** | 100% | / | / | / | 0 | 9 |
| ***Musca domestica*** | 100% | / | / | / | 0 | 1 |

L'extrait selon l'invention ne permet pas d'obtenir un knock-down à 100% en 1 heures sur les 3 espèces d'insectes et encore moins une mortalité de 100% en 24h. Ainsi, l'extrait selon l'invention est un puissant activateur des substances insecticides et permet avantageusement de réduire les doses utilisées de ces substances.

Ainsi, les extraits selon l'invention sont des activateurs de produits pesticides à l'encontre d'insectes xylophages ainsi que des insectes volants et rampants.

Les extraits selon donc avantageusement des produits naturels, qui permettent de diminuer la dose de produits insecticides tout en maintenant son efficacité. Ils peuvent donc être utilisés efficacement en combinaison avec des produits pesticides dans des procédés de traitement curatif et/ou préventif du bois ainsi que dans des procédés de lutte contre les nuisibles.

### Exemple 3 : Compositions insecticides comprenant les extraits selon l'invention

Les compositions suivantes ont été mises au point pour être utilisées dans un procédé de lutte contre les nuisibles sous forme d'aérosol. Typiquement, les formulations pourront être pulvérisées sur les insectes rampants et/ou volants, pendant une durée d'environ 2 secondes à une distance de 60 centimètres.

**[Tableau 12]**

| Ingrédient | Quantité (%en poids) |
|---|---|
| Co-solvant | 0.7 |
| Cyperméthrine | 0.56 |
| Alcool ethoxylé | 0.71 |
| Block-copolymer | 1.07 |
| Extrait de pépins de raisin | 0.2 |
| EDTA | 2.00 |
| Eau | qsp |

**[Tableau 13]**

| Ingrédients | Quantité (%en poids) |
|---|---|
| Ethanol | 1.00 |
| Deltamethrine | 0.025 |
| D-allethrine | 0.163 |
| Alcool ethoxylé | 0.71 |
| Block-copolymer | 1.07 |
| Extrait d'écorce de pin | 0.2 |
| Eau | qsp |

### Exemple 4 : Formulation gel comprenant les extraits selon l'invention pour le traitement du bois

La formulation gel ci-après décrite a été mise au point pour être utilisée dans un procédé de traitement curatif et/ou préventif du bois. La formulation gel va avantageusement permettre de faire diffuser les principes actifs dans le bois pour une action préventive ou curative en profondeur.

**[Tableau 13]**

| Ingrédients | Quantité (%en poids) |
|---|---|
| Iso-alcanes | 34.00 |
| Cyperméthrine | 0.16 |
| Ether de cellulose | 0.8 |
| Mélange d'un extrait de pépins de raisin et d'un extrait d'écorce de pin | 0.2 |
| Eau | qsp |

### Exemple 5 : Démonstration de l'effet activateur des molécules pesticides, des extraits de pépins de raisin selon l'invention - Tests sur Reticulitermes flavipes et Coptotermes gestroi

Il est connu que le diflubenzuron seul est efficace contre les termites de l'espèce Reticulitermes qu'à partir d'une dose de 0.25% m/m et qu'à cette dose, il n'est pas efficace contre les termites de l'espèce Coptotermes.

Formulation sous forme de pastille solide: Diflubenzuron + extrait de pépins de raisin

Des formulations solides sous forme de pastilles comprenant du diflubenzuron et de l'extrait de pépin ont été préparées :
- une dose « 100% », correspond à une dose [0.30% m/m de diflubenzuron] couplée avec 6% m/m d'extrait de pépin de raisin;
- une dose « 50% », correspond à une dose [0.15% m/m de diflubenzuron] couplée avec 6% m/m d'extrait de pépin de raisin ;
- une dose « 33,3% », correspond à une dose [0.10% m/m de diflubenzuron] couplée avec 6% m/m d'extrait de pépin de raisin.

L'effet biocide de ces pastilles a été testé sur une période de 6 semaines sur des populations de *Reticulitermes flavipes* ou de *Coptotermes gestroi* cultivées en matrice à 27°C (± 2°C) 78% d'humidité relative (± 2%). Les essais sont réalisés en quintuplicata.

Les résultats des essais sur *Reticulitermes* montrent que :
- les courbes de mortalité sont similaires pour les doses « 100% » et « 50% » ;
- les premiers signes de mortalité apparaissent dès le trentième jour pour les doses « 100% » et « 50% », plus tardivement pour la dose « 33,3% » ;
- pour les doses « 100% », « 50% » et « 33,3% », la mortalité totale des termites intervient respectivement au bout de 42, 47 et 50 jours.

En somme, les résultats des essais montrent qu'en présence d'extrait de pépin de raisin, le diflubenzuron est biocide contre les *Reticulitermes* même lorsqu'il est utilisé en deçà de la dose minimale d'efficacité du diflubenzuron (seul) contre les *Reticulitermes,* et qu'on peut diviser jusqu'à par 3 la dose de diflubenzuron sans perte significative d'efficacité.

Les résultats des essais montrent que les pastilles sont biocides contre les *Coptotermes* aux doses « 100% », « 50% » et « 30% ».

Ainsi, les résultats des essais montrent que lorsque le diflubenzuron est utilisé en combinaison avec un extrait de pépin de raisin, il présente une activité biocide contre les *Coptotermes* alors que le diflubenzuron seul n'aurait eu aucune activité biocide contre cette espèce de termite.

Ainsi, les extraits de pépin de raison selon l'invention sont des activateurs de produits pesticides à l'encontre de termites.

## Revendications

1. Utilisation oligomères procyanidoliques en tant qu'activateur de produit pesticide.

2. Utilisation selon la revendication 1, **caractérisé en ce que** le produit pesticide est pesticide à l'encontre des insectes nuisibles et/ou des insectes xylophages et/ou des champignons et/ou des champignons xylophages.

3. Utilisation selon la revendication 1 ou 2, **caractérisée en ce que** les insectes nuisibles sont choisis parmi les blattes, les fourmis, les puces, les punaises de lit, les punaises des bois, le cloporte (Porcellio scaber), le poisson d'argent (Lepisma saccharina), le tribolium de la farine (Tribolium confusum), le petit ténébrion (Alphitobius spp), le ténébrion jaune (Tenebrio molitor), le leoléoptère des tapis (Anthrenus flavipes), les araignées, les poux, les guêpes, les frelons, les mouches, les abeilles, les mites, la pyrale méditerranéenne de la farine (Ephestia kuehniella), les mites de vêtement, les moustiques, le charançon du riz (Sitophilus oryzae), l'aiguillonnier (Rhizoperta dominica), le calandre des grains (Sitophilus granarius), Sitophilus zeamais, l'alucite des grains (Sitotroga cerealella), Acarus siro, le ciron des champignons (Tyrophagus putrescentieae), le silvain (Oryzaephilus surinamensis), le petit ver de la farine (Tribolium castaneum, Tribolium confusum), Cryptolestes ferrugineus, Tenebroides mauritanicus, la Teigne des fruits secs (Plodia interpunctella), la pyrale de la farine (Ephestia kuehniella).

4. Utilisation selon la revendication 1 ou 2, **caractérisée en ce que** les insectes xylophages sont choisis parmi Reticultitermes spp, Coptotermes spp, Prorhinotermes spp, Cryptotermes spp, Heterotermes spp, Nasusitermes spp, Macrotermes spp, Odontermes spp, Schedorhinotermes spp, Microtermes spp, Microcerotermes spp, Allodontermes spp, les capricornes tels que *hylotrupes bajulus,* les fourmis charpentières, les vrillettes telles que la petite vrillette, la grosse vrillette, la vrillette du pain et la vrillette des bibliothèques, les lyctus tels que le *lyctus brunneus,* le *lyctus linearus,* les insectes de bois frais, les hespérophanes.

5. Utilisation selon la revendication 1 ou 2, **caractérisée en ce que** les champignons xylophages sont choisis parmi le coloriole multicolore (Coriolus Versicolor), le polypore des caves (Donkiporia), la mérule et ses rhizomorphes (Serpula Lacrymans), le coniophore des caves (Coniophora Puteana), Poria Vaporaria, Poria Spez, la lenzite du chêne, *Gloeophyllum Trabeum* et *Rhodonia placenta.*

6. Utilisation selon la revendication 1 ou 2, **caractérisée en ce que** les champignons sont choisis parmi *Fusarium culmorum, Fusarium graminum, Gibberella avenacea, Monographella nivalis, Fusarium culmorum, Fusarium graminum, Verticillium sp., Pythium irregulare, Thanatephorus cucumeris, Fusarium solani, Thanatephorus cucumeris, Trichoderma viride, Sclerotinia sclerotiorum, Alternaria solani, Penicillium funiculosum, Aspergillus niger, Ceratocystis pilifera, Pyrenophora teres, Cercospora beticola, Pyrenophora tritici-repentis, Botryotinia fuckeliana, Botryotinia fuckeliana, Phytophthora infestans, Verticillium sp.*

7. Utilisation selon l'une quelconque des revendications 1 à 6, **caractérisée en ce que** les oligomères procyanidoliques sont sous forme d'un extrait de plante choisi parmi les espèces *Vitis vinifera L, Pinus pinaster,* et *Arachis hypogaea.*

8. Utilisation selon l'une quelconque des revendications 1 à 7, **caractérisée en ce que** le produit pesticide est choisi parmi la thiaclopride, la cyperméthrine, la perméthrine, le diflubenzuron, la bifenthrine, la deltaméthrine, le fipronil, l'imiprothrine, la D-alléthrine, le Piperonyl Butoxide, le Geraniol, la d-tetramethine, l'extrait de poivre, l'esbiothrine, la pralléthrine, le chlorfénapyr, le cyanamide, le chrysantheum, les fongicides de la famille des triazoles tels que le propiconazole, le tébuconazole, le cyproconazol, le 3-iodo-2-propynylbutylcarbamate (IPBC), le penfluflen, le fenpropimorphe, les ammoniums quaternaires et les sels d'ammonium quaternaires tels que le chlorure d'alkyldiméthylbenzylammonium (ADBAC, BKC), le cation tétraméthylammonium (TMAC), le N-(3-aminopropyl)-N-dodecylpropane-1,3-diamine (diamine), le propionate de N,N-Didecyl-N-methyl-poly(oxyethyl) ammonium (Bardap26), le chlorure de didécyldiméthylammonium (DDAC) et leur mélange, les microorganismes.

9. Procédé de traitement curatif et/ou préventif de protection du bois ou de luttes anti-nuisibles du bois au moyen d'un produit de protection du bois ou de lutte anti-nuisibles du bois, ledit produit comprenant au moins un extrait de plante ayant une teneur en oligomères procyanidoliques supérieure ou égale à 30% en poids, par rapport au poids total de l'extrait de plante, et au moins un produit insecticide et/ou fongicide, ledit procédé comprenant l'étape consistant à appliquer ledit produit sur le bois à traiter et/ou la surface.

10. Procédé de lutte contre les nuisibles au moyen d'une composition insecticide et/ou une composition répulsive et/ou fongicide, ladite ou lesdites composition(s) comprenant au moins un extrait de plante ayant une teneur en oligomères procyanidoliques supérieure ou égale à 30% en poids, par rapport au poids total de l'extrait de plante, et au moins un produit insecticide et/ou fongicide, ledit procédé comprenant l'étape consistant à appliquer ladite ou lesdites composition(s) sur la surface à traiter.

11. Produit de protection du bois ou de lutte anti-nuisibles du bois comprenant un mélange d'un extrait de pépins de raisin et/ou d'un extrait d'écorce de pin et/ou d'un extrait de pellicule de cacahuète, et au moins un produit insecticide et/ou fongicide, ledit au moins un produit insecticide et/ou fongicide étant présent dans le produit de protection du bois ou de lutte anti-nuisibles du bois en une teneur comprise entre 0.001 et 5% en poids, par rapport au poids total du produit, préférentiellement entre 0.01 et 2 % en poids, par rapport au poids total du produit, et ledit ou lesdits extraits étant présent(s) dans le produit en une teneur comprise entre 0.05 et 5% en poids, par rapport au poids total du produit, préférentiellement entre 0.05 et 2% en poids, par rapport au poids total du produit.

12. Composition comprenant un extrait de raisin et/ou un extrait de pin et/ou un extrait de cacahuète, et au moins un produit insecticide, ledit au moins un produit insecticide étant présent dans la composition en une teneur comprise entre 0.001 et 5% en poids, par rapport au poids total de la composition, préférentiellement entre 0.01 et 1% en poids, par rapport au poids total de la composition, et ledit ou lesdits extraits étant présent(s) dans la composition en une teneur comprise entre 0.05 et 5% en poids, par rapport au poids total de la composition, préférentiellement entre 0.05 et 2% en poids, par rapport au poids total de la composition.

13. Kit insecticide ou fongicide ou pour la protection du bois ou pour la lutte anti-nuisibles du bois, comprenant d'une part un extrait de plante ayant une teneur en oligomères procyanidoliques supérieure ou égale à 30% en poids, par rapport au poids total de l'extrait de plante et d'autre part, un insecticide parmi la thiaclopride, la cyperméthrine, la perméthrine, le diflubenzuron, la bifenthrine, la deltaméthrine, l'imiprothrine, la D-alléthrine, le Piperonyl Butoxide, le Geraniol, la d-tetramethine, un extrait de poivre, l'esbiothrine, la pralléthrine, le chlorfénapyr, le cyanamide, le chηsantheum et/ou un fongicide choisi parmi les fongicides de la famille des triazoles tels que le propiconazole, le tébuconazole, le cyproconazole, le 3-iodo-2-propynylbutylcarbamate (IPBC), le penfluflen, le fenpropimorphe, les ammoniums quaternaires et les sels d'ammonium quaternaires tels que le chlorure d'alkyldiméthylbenzylammonium (ADBAC, BKC), le cation tétraméthylammonium (TMAC), le N-(3-aminopropyl)-N-dodecylpropane-1,3-diamine (diamine), le propionate de N,N-Didecyl-N-methyl-poly(oxyethyl) ammonium (Bardap26), le chlorure de didécyldiméthylammonium (DDAC) et leurs mélanges, les microorganismes.
